Europäisches Patentamt

European Patent Office

Office européen des brevets

(19)

(11) Veröffentlichungsnummer: **0 027 543 B1**

(12) # EUROPÄISCHE PATENTSCHRIFT

(45) Veröffentlichungstag der Patentschrift:
**18.05.83**

(51) Int. Cl.³: **B 32 B 17/04**, B 29 D 3/02

(21) Anmeldenummer: **80105460.2**

(22) Anmeldetag: **12.09.80**

(54) **Verfahren und Vorrichtung zur kontinuierlichen Herstellung von ein- oder mehrschichtigen, verstärkten Bahnen aus wärmehärtbarem Kunststoff.**

(30) Priorität: **19.10.79 DE 2942413**

(43) Veröffentlichungstag der Anmeldung:
**29.04.81 Patentblatt 81/17**

(45) Bekanntmachung des Hinweises auf die Patenterteilung:
**18.05.83 Patentblatt 83/20**

(84) Benannte Vertragsstaaten:
**AT CH DE FR IT LI SE**

(56) Entgegenhaltungen:

DE-A-1 945 779
FR-A-1 324 495
FR-A-1 558 835
FR-A-2 155 886
FR-A-2 291 859
FR-A-2 360 419

(73) Patentinhaber: **CHEMIE LINZ AKTIENGESELLSCHAFT,**
**St. Peter-Strasse 25, A-4020 Linz (AT)**

(84) Benannte Vertragsstaaten: **CH FR IT LI SE AT**

(73) Patentinhaber: **Lentia Gesellschaft mit beschränkter Haftung, Arabellastrasse 4 Postfach 81 05 08, D-8000 München 81 (DE)**

(84) Benannte Vertragsstaaten: **DE**

(72) Erfinder: **Schnell, Peter, Schulstrasse 17, A-6060 Absam (AT)**
Erfinder: **Bihlmayer, Gustav, Dr., St. Ulrich 93, A-4400 Steyr (AT)**
Erfinder: **Daume, Dietrich, Franckstrasse 23a, A-4020 Linz (AT)**

ACTORUM AG

## Verfahren und Vorrichtung zur kontinuierlichen Herstellung von ein- oder mehrschichtigen, verstärkten Bahnen aus wärmehärtbarem Kunststoff

Die Erfindung bezieht sich auf ein kontinuierliches Verfahren zur Herstellung von faserverstärkten oder sonstigen verstärkten Bahnen aus wärmehärtbaren Kunststoffen, die noch weitere Schichten, wie Grundfolien, Dekorfolien oder Abdeckfolien, im Verbund enthalten können, und eine Vorrichtung zur Durchführung des Verfahrens.

Verfahren zur kontinuierlichen Herstellung von faserverstärkten oder auf andere Weise durch Einlegung von porösem Material verstärkten Bahnen aus wärmehärtbaren Harzen, wie z.B. Epoxyharze oder Polyesterharze, sind bekannt, wobei der Transport des Laminats während der Herstellung durch ein endloses, umlaufendes Transportband vorgenommen werden kann (P. Selden, Glasfaserverstärkte Kunststoffe, Springer Verlag 1967, Seite 558). Die kontinuierliche Aushärtung erfolgte dabei meist unter Erwärmen in einer langgestreckten Heizzone, siehe z.B. P. Selden, Seite 612, wobei diese auch eine beheizte Bandpresse sein kann (AT-B-349 366).

Es ist aus FR-A-2 155 886 bekannt, Deckschichten zur Fabrikation von Bauteilen so herzustellen, dass in eine auf eine polierte Metallplatte aufgetragene Harzschicht bei Beginn des Gelierprozesses vorgespannte, jedoch bereits mit Harz imprägnierte Fasern von oben eingedrückt und mit Stössen senkrecht zur Oberfläche ineinander gepresst und verbunden werden.

Die Imprägnierung der Verstärkungseinlage, vorzugsweise einer Fasermatte oder eingelegter Einzelfäden mit dem Harz erfolgt meist nach dem sog. Tauchverfahren durch Passieren einer Imprägnierwanne (AT-B-349 366), wobei der Harzüberschuss anschliessend entweder mittels einer Kalibrierdüse (AT-B-349 366) oder mittels Abquetschwalzen (siehe E. W. Laue, Glasfaserverstärkte Polyester und andere Duromere, Zechner & Hüthig Verlag GmbH, Speyer-Wien-Zürich, Seite 332) entfernt wird. Diese Methoden der Harzentfernung führen vor allem dort, wo mit hohen Glasgehalten gearbeitet wird, zu Faserbrüchen, die die Festigkeit des Laminats beeinträchtigen.

Es ist auch schon vorgeschlagen worden, das Harz bei kontinuierlicher Arbeitsweise mittels einer Rakelvorrichtung aufzutragen (siehe P. Selden, Seiten 611 und 612).

Bei allen diesen Verfahren ist darauf zu achten, dass das Harz gleichmässig aufgebracht wird und luftblasenfrei eine Benetzung und Durchtränkung des Fasermaterials erzielt wird. Dies wird umso schwieriger, je höher der Glasgehalt ist und es tritt bei allen Verfahren die Schwierigkeit auf, dass die eingebrachte Luft nur zögernd oder nur unvollständig aus dem Harz abgeht, wobei sie in manchen Fällen durch apparative Einrichtungen auch am freien Abgang behindert wird.

Der Erfindung liegt nun die Aufgabe zugrunde, ein Verfahren bereitzustellen, mit dem es möglich ist, bei der kontinuierlichen Laminatherstellung eine einwandfreie und luftblasenfreie Durchtränkung des Faser- bzw. Verstärkungsmaterials zu erzielen, ohne dass Fadenbrüche in Kauf genommen werden müssen. Dies soll auch dann gelingen, wenn grosse Arbeitsbreiten und/oder ein hoher Fasergehalt gewählt werden. Es konnte gefunden werden, dass diese Aufgabe dann gelöst werden kann, wenn die durch eine Rakel mit Harz gleichmässig beschichtete Bahn in ihrem weiteren Verlauf, jedoch noch vor der Härtung, in einem stumpfen Winkel über eine Rolle geführt wird und am Auflaufpunkt dieser Rolle mit der Verstärkungsbahn von oben her so zusammengeführt wird, dass auch diese über die Rolle einen stumpfen Winkel beschreibt. Durch die einen Winkel beschreibende, anstelle der bisher ebenen Bahnführung, wird am Scheitelpunkt der Rolle, wo Harz und Verstärkungsmaterial zusammenkommen, ein Druck ausgeübt, der die vollständige Tränkung und das Auspressen der Luft bewirkt, ohne dass die Verstärkungsfasern beansprucht werden. Der Druck wird dadurch noch etwas verstärkt, dass das zu tränkende Gewebe- oder Fasermaterial unter Spannung steht und dadurch direkt in das Harz hineingedrückt wird. Da dieser Druckpunkt gleichzeitig der Scheitelpunkt eines Winkels ist, ist der Luftaustritt noch begünstigt.

Gegenstand der vorliegenden Erfindung ist demnach ein Verfahren zur kontinuierlichen Herstellung von ein- oder mehrschichtigen, verstärkten Bahnen aus wärmehärtbarem Kunststoff durch Einbringen einer Verstärkungsbahn in eine auf eine Trägerbahn mittels Rakel kontinuierlich aufgetragene Harzmischung und anschliessender Aushärtung unter erhöhter Temperatur und unter Druck, das dadurch gekennzeichnet ist, dass durch die Trägerbahn in ihrem Verlauf ein stumpfer Winkel $\alpha$ mit nach oben liegendem Scheitel gebildet wird, dass vor Erreichen des Scheitelpunktes die Harzmischung aufgetragen wird, dass die den gebildeten Harzfilm tragende Trägerbahn am Scheitelpunkt mit der ebenfalls in einem stumpfen Winkel $\beta$ mit nach oben liegendem Scheitel verlaufenden, unter Vorspannung befindlichen Verstärkungsbahn aus Faserstoff oder saugfähigem Schaumstoff vereinigt wird, wobei der Winkel $\beta$ grösser als $\alpha$ aber kleiner als 180° ist und den Scheitel sowie den in Laufrichtung weisenden Schenkel mit $\alpha$ gemeinsam hat, und dass gegebenenfalls eine oder mehrere Trenn-, Dekor- und/oder harzundurchlässige, gegebenenfalls mit Kleber beschichtete Abdeckfolien vor oder nach Erreichen des Scheitelpunktes zugeführt werden.

Das erfindungsgemässe Verfahren erlaubt eine Reihe von Ausgestaltungen, die einfach und zweckmässig durchzuführen sind. So kann z.B. die Bahn, die mit Harz beschichtet wird, eine Trennfolie, z.B. ein Silikonpapier, sein, die dann vom ausgehärteten Harz abgezogen wird. Die saubere Trennung wird durch die Trennwirkung der Folie selbst, oder auch durch Zusätze zum Harz bewirkt. Auf diese Weise erhält man ein Einschichtenmaterial.

Man kann aber als Trägerbahn auch ein Material verwenden, das harzundurchlässig ist, sich aber mit dem Harz verbindet. In diesem Fall wird als Trägerbahn eine Folie z.B. aus einem Acrylnitril-Butadien-Styrol-Polymerisat, aus Polyäthylen oder Polyurethan, eine Metallfolie, wie Aluminium oder Kupfer oder auch ein Holzfurnier verwendet. Soll das erfindungsgemäss hergestellte Schichtmaterial z.B. ein Schibauteil sein, so kann die Trägerbahn z.B. auch das Material der Lauffläche sein, wobei es möglich ist, zwischen diese Trägerbahn und das Harz noch eine saugfähige, ein Dekor oder eine Beschriftung aufweisende Schicht, z.B. eine Papierbahn, einzulegen. Auf diese Weise kann in einem Arbeitsgang ein Schibauteil gefertigt werden, der als Untergurt dienen kann.

Um ein Verkleben der Harzoberfläche mit dem Pressband zu vermeiden, wird zweckmässig eine Trennfolie dazwischengelegt. Die Zuführung dieser Trennfolie erfolgt zwingend erst nach der Vereinigung von Harz und Faser- bzw. Verstärkungsmaterial am Scheitel des stumpfen Winkels im Bahnverlauf, damit der freie Luftaustritt nicht behindert wird. Vorzugsweise wird diese Trennfolie an jener Stelle zugeführt, an der das Pressband auf die Harzoberfläche zu wirken beginnt. Anstelle einer Trennfolie kann aber auch eine Abdeckfolie zugeführt werden, die die Oberschicht des Laminats bilden soll. Diese Folie kann entweder selbst ein Dekor aufweisen oder es kann zwischen Harz und Abdeckfolie noch eine harzdurchlässige, saugfähige Dekorfolie dazwischengelegt werden. Während des Aushärtens vereinigt sich die Abdeckfolie dann mit dem verstärkten Kunststoff. Gegebenenfalls kann auch die Unterseite der Abdeckbahn zur Erzielung einer besseren Haftung mit Kleber beschichtet werden. Diese Abdeckbahn ist vorzugsweise eine Thermoplastfolie, wie sie z.B. bei Schibauteilen als Oberfläche dient. Günstig ist es, wenn das Harz vor Aufbringung dieser Deckfolie schon bis zum B-Zustand vorgehärtet ist, was möglich ist, wenn man die harzdurchtränkte Faserbahn vor der Einwirkungsstelle des Pressbandes etwas erwärmt. Dies hat den Vorteil, dass gleich mit hohen Drücken verpresst werden kann, ohne dass Harzverluste in Kauf genommen werden müssen. Auf diese Weise kann z.B. ein Laminat hergestellt werden, das als Obergurt für einen Schi eingesetzt werden kann.

Der Harzfilm kann vor Erreichen der Vereinigungsstelle mit dem Verstärkungsmaterial je nach Harzzusammensetzung geheizt oder gekühlt werden. Er darf an dieser Stelle aber noch nicht vorgehärtet werden.

Als Harze kommen alle wärmehärtbaren Harze, wie z.B. Polyester, Epoxyharze und Polyurethanharze in Betracht. Als Verstärkungsmaterial können sowohl gleichmässig gelegte Einzelfasern oder auch Gewebe usw. dienen. Produkte aus Glasfasern, Stahlfasern, Kohlenstoffasern oder auch aus thermoplastischen Fasern kommen hier in Frage. Die Erfindung ist aber keinesfalls auf die Verwendung von Fasermaterial zur Verstärkung beschränkt, sondern es können ebenso gut auch andere poröse Materialien, wie Netze oder Schaumstoffe mit offenen Poren eingesetzt werden.

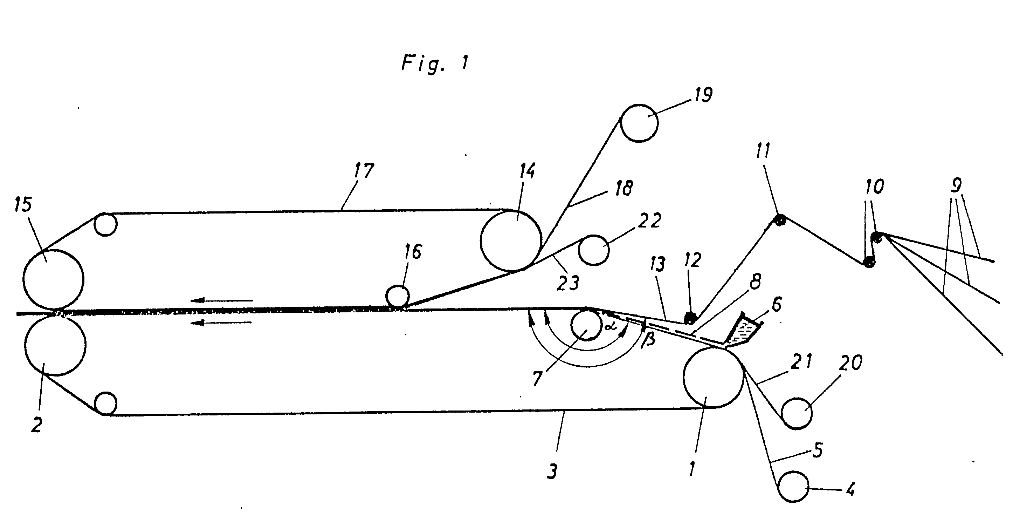

Ein weiterer Gegenstand der vorliegenden Erfindung ist eine Vorrichtung zur Durchführung des erfindungsgemässen Verfahrens, die anhand der schematischen Darstellung in Figur 1 näher erläutert werden soll.

In dieser Figur bedeutet 3 ein umlaufendes, endloses Transportband, das über die Antriebsrollen 1 und 2 geführt wird und mit Harzmischung beschichtet werden kann. 4 ist eine Vorratsrolle für jene Bahn 5, die mit Kunststoff beschichtet werden kann und entweder eine Trennfolie oder eine Trägerbahn sein kann. 6 bedeutet die Rakelvorrichtung, durch die auf der Trägerbahn der Harzfilm 8 erzeugt wird. Das Transportband 3 bzw. die darauf geführte Bahn 5 schliessen in ihrem Weg von der Antriebsrolle 1 zur Antriebsrolle 2 einen durch die Anordnung der Umlenkrolle 7 gebildeten, stumpfen Winkel $\alpha$ ein. Am Auflaufpunkt dieser Rolle wird der Harzfilm 8 mit der Verstärkungsbahn 13 vereinigt, wobei letzteres von oben auf den Harzfilm auftrifft, über die Rolle 7 aber ebenfalls einen stumpfen Winkel $\beta$ beschreibt, der grösser als $\alpha$ ist. Die Verstärkungsbahn 13 befindet sich unter Spannung, die durch Zusammenwirken der Bremse 10 mit der oberen Stange 11 und der unteren Stange 12 entsteht. Die Anordnung der unteren Stange 12 ist hierbei wesentlich. Sie muss so im Niveau zwischen Antriebsrolle 1 und Umlenkrolle 7 liegen, dass die Verstärkungsbahn unterhalb der Horizontalen in spitzem Winkel der harztragenden Bahn zugeführt wird. Durch alle diese Massnahmen wird im Auflaufpunkt der Rolle 7 eine vertikale Kraftkomponente ausgeübt, die die vollständige Durchtränkung und das Auspressen der Luft, die ungehindert nach oben entweichen kann, bewirkt. Diese vertikale Kraftkomponente kann durch Variation des Winkels $\beta$ bzw. durch Änderung der Stellung der unteren Stange 12 bzw. durch Variation in der Bremse 10 variiert werden. Wesentlich ist auch, dass die Stange 12 so angeordnet ist, dass sie den Harzfilm nicht berührt, andernfalls würde an der Stange eine Harzablagerung eintreten, die durch Verhärtung zu ungleichmässigem Harzauftrag und Betriebsstörungen Anlass geben könnte. Handelt es sich beim Verstärkungsmaterial um Einzelfäden 9, so werden diese bei der Bremse 10 zusammengeführt.

Nach Passieren der Rolle 7 wird das mit der Verstärkungsbahn 13 vereinigte Harz noch eine gewisse Strecke weitergeführt, bevor es mit dem Pressband 17 in Berührung kommt. In diesem Bereich kann gewünschtenfalls eine Vorhärtung erfolgen. Das durch die Rollen 14 und 15 angetriebene Pressband wird durch die Niederhalterolle 16 auf die am Transportband 3 befindliche, harzdurchtränkte Bahn aufgedrückt, wobei in diesem Bereich auch durch Heizung für die für die Härtung nötige Wärme gesorgt wird.

Ist eine Abdeckfolie vorgesehen, so führt man diese gemeinsam mit dem Pressband 17 an den harzgetränkten Stoff heran, wobei 19 die Vorratsrolle für die Abdeckbahn 18 ist. Wird keine Abdeckfolie verwendet, die auf dem gebildeten Prepreg bleiben soll, wird an dieser Stelle eine Trennfolie zugeführt.

Ist die Abdeckfolie eine Deckfolie für das fertige Laminat, kann sie vor Erreichen der Rolle 14 noch mit Kleber bestrichen werden. 20 bedeutet eine Vorratsrolle für eine Dekorfolie 21, sofern eine solche angewendet werden soll. Ebenso kann von der Rolle 22 her noch eine Dekorfolie 23 zugeführt werden.

Die vorliegende Erfindung soll anhand folgender Beispiele näher erläutert werden. Die in den Beispielen angewendeten Bezugsziffern beziehen sich auf Figur 1, die angegebenen Teile sind Gewichtsteile.

*Beispiel 1*

Auf ein von der Rolle 4 kommendes Silikonpapier wird mittels Rakel 6 ein Harzgemisch folgender Zusammensetzung

100 Teile Bisphenol A-Diglycidyläther
10 Teile Cyanamid
0,5 Teile Dimethylbenzylamin

in einer Stärke von 0,45 mm aufgetragen. In diesen Harzfilm werden am Auflaufpunkt der Rolle 7 vorgespannte 2 400 tex Glasrovings (3 Fäden pro 1 cm) unter einem spitzen Winkel eingedrückt, wobei sich das Harz noch in ungehärtetem Zustand (A-Zustand) befindet. Unmittelbar nach Verlassen der Rolle 7 wird das Harz durch Erwärmen des Trägerbandes auf 100°C drucklos vorgeliert. Nach Passieren der Rolle 16, wo ein Silikonpapier zugeführt wird, erfolgt die Aushärtung unter Druck auf 180°C bei einer Durchgangszeit von 3 Minuten. Das Laminat verlässt die Presse mit einer Stärke von 0,7 mm und einem Glasanteil von etwa 70%.

*Beispiel 2*

Auf gleiche Weise wie in Beispiel 1 beschrieben, wird ein Glasseidengewebe eines Flächengewichtes von 700 g/m² bei einem Harzauftrag von 0,45 mm Dicke imprägniert und ausgehärtet. Es entsteht ein Laminat von 0,7 mm Stärke und einem Glasfasergehalt von 70%.

*Beispiel 3*

Bei einer Arbeitsweise gemäss Beispiel 1 werden als Verstärkungsmaterial 940 tex Kohlenfaserrovings verwendet, wobei der Harzfilm eine Stärke von 0,25 mm aufweist. Es entsteht ein Kohlenfaserlaminat einer Dicke von 0,35 mm.

*Beispiel 4*

Auf eine Trennfolie aus silikonbeschichtetem Papier wird über die Rakel 6 ein Harz folgender Zusammensetzung in einer Schicht von 0,35 mm Stärke aufgetragen:

80 Teile Bisphenol A-Diglycidyläther
20 Teile Bisphenol F-Diglycidyläther
13 Teile Trimethylentetramin.

In diese Harzmischung werden vorgespannte 2 400 tex Glasrovings (2 Fäden pro 1 cm) eingedrückt. Nach Passieren der Umlenkwalze 7 wird 3 Minuten bei 60°C druckfrei geliert und anschliessend bei 80°C unter einem Druck von 4 bar 4 Minuten gehärtet. Es entsteht ein einschichtiges Laminat von 0,5 mm Dicke und einem Glasanteil von 74%. Wird anstelle der Glasrovings ein 500 g/m² schweres Glasrovinggewebe verwendet, entsteht ein bidirektionales Laminat mit einer Dicke von 0,5 mm.

*Beispiel 5*

Eine 1 mm dicke ABS-Folie wird wie in Beispiel 4 beschrieben mit dem Harz der dort beschriebenen Harzzusammensetzung beschichtet, mit vorgespannten 2 400 tex Glasrovings (2 Fäden pro 1 cm) vereinigt, vorgeliert und ausgehärtet. Es entsteht ein Verbundbauteil aus ABS-Folie und Laminat von etwa 1,5 mm Gesamtdicke.

*Beispiel 6*

Eine 1 mm dicke ABS-Folie wird wie in Beispiel 4 beschrieben mit dem Harz der dort beschriebenen Harzzusammensetzung beschichtet, mit vorgespannten 2 400 tex Glasrovings (2 Fäden pro 1 cm) vereinigt, wie in Beispiel 4 beschrieben vorgeliert und im durch die Rolle 16 gegebenen Presspunkt mit einer von der Rolle 19 kommenden, mit dem Pressband gemeinsam zugeführten, 1 mm starken, an der Oberseite bedruckten ABS-Folie abgedeckt. Nach Aushärtung wie in Beispiel 4 entsteht ein Dekor-Verbundbauteil aus ABS-Laminat-ABS mit einer Gesamtdicke von 2,5 mm.

Wird anstelle der als Träger benützten ABS-Folie ein 0,5 mm dickes, oxydativ vorbehandeltes Aluminium der Rolle 1 zugeführt und so wie in Beispiel 6 weiterverfahren, erhält man ein Dekor-Verbundbauteil aus Aluminium-Laminat-ABS einer Gesamtdicke von 2 mm.

*Beispiel 7*

Ein von der Rolle 4 kommendes Silikonpapier wird mittels Rakel 6 mit einem Harzgemisch der Zusammensetzung

100 Teile Bisphenol A-Diglycidyläther
10 Teile Cyanamid
0,5 Teile Dimethylbenzylamin

in einer Stärke von 0,5 mm beschichtet. Dieser Harzfilm wird am Auflaufpunkt der Rolle 7 mit einer Glasmatte mit einem Flächengewicht von 400 g/m² vereinigt und durch Erwärmen auf 100°C vorgeliert. Unmittelbar vor dem Druckpunkt wird ein mit Dekor versehenes $\alpha$-Zellulosepapier zugeführt, das durch den Druck vollständig durchtränkt wird. Nach einer Aushärtezeit von 3 Minuten bei 180°C entsteht eine 0,5 mm dicke Schichtstofftafel.

**Patentansprüche**

1. Verfahren zur kontinuierlichen Herstellung von ein- oder mehrschichtigen, verstärkten Bahnen aus wärmehärtbarem Kunststoff durch Einbringen einer Verstärkungsbahn in eine auf eine Trägerbahn mittels Rakel kontinuierlich aufgetragene Harzmischung und anschliessender Aushärtung unter erhöhter Temperatur und unter Druck, dadurch gekennzeichnet, dass durch die Trägerbahn in ihrem Verlauf ein stumpfer Winkel $\alpha$ mit nach oben liegendem Scheitel gebildet wird, dass vor Erreichen des Scheitelpunktes die Harzmischung aufgetragen wird, dass die den gebildeten Harzfilm tragende Trägerbahn am Scheitelpunkt mit der ebenfalls in einem stumpfen Winkel $\beta$ mit nach oben liegendem Scheitel verlaufenden, unter Vorspannung befindlichen Verstärkungsbahn aus Faserstoff oder saugfähigem Schaumstoff vereinigt wird, wobei der Winkel $\beta$ grösser als $\alpha$, aber kleiner als 180°C ist und den Scheitel sowie den in Laufrichtung weisenden Schenkel mit $\alpha$ gemeinsam hat, und dass gegebenenfalls eine oder mehrere Trenn-, Dekor- und/oder harzundurchlässige, gegebenenfalls mit Kleber beschichtete Abdeckfolien vor oder nach Erreichen des Scheitelpunktes zugeführt werden.

2. Verfahren nach Anspruch 1, dadurch gekennzeichnet, dass die mit Harzmischung zu beschichtende Trägerbahn harzabweisend ist und/oder die aufzutragende Harzmischung mit Mitteln versehen ist, die eine Verbindung mit der Trägerbahn verhindern, wobei die Trägerbahn das Transportband (3) oder die Bahn (5) ist, welche als Trennfolie ausgebildet ist und sich nicht mit dem Schichtstoff vereinigt.

3. Verfahren nach Anspruch 1, dadurch gekennzeichnet, dass die Trägerbahn harzundurchlässig ist, sich jedoch mit der Harzmischung verbindet, wobei die Trägerbahn die Bahn (5) ist.

4. Verfahren nach Anspruch 1, dadurch gekennzeichnet, dass der Trägerbahn vor Auftrag des Harzgemisches eine kunstharzdurchlässige, gegebenenfalls ein Dekor oder eine Bedruckung aufweisende Bahn zugeführt wird, die dann mit der Harzmischung bestrichen wird.

5. Verfahren nach den Ansprüchen 1 bis 4, dadurch gekennzeichnet, dass der Trägerbahn nach Erreichen des Scheitelpunktes eine Abdeckbahn (18), welche als harzabweisende Trennfolie oder als harzundurchlässige, sich jedoch mit der Harzmischung verbindende, gegebenenfalls mit Kleber beschichtete Deckfolie ausgebildet ist sowie gegebenenfalls zwischen Abdeckbahn (18) und Trägerbahn eine kunstharzdurchlässige Dekorfolie (23) zugeführt wird.

6. Verfahren nach Anspruch 5, dadurch gekennzeichnet, dass die harzundurchlässige, sich jedoch mit der Harzmischung verbindende Deckfolie aus thermoplastischem Kunststoff ist und die Harzmischung vor der Vereinigung mit der Deckfolie, jedoch nach Passieren des Scheitelpunktes unter Einwirken von erhöhter Temperatur bis zum Erreichen des B-Zustandes gehärtet wurde.

7. Vorrichtung zur Durchführung des Verfahrens gemäss den Ansprüchen 1 bis 6, beinhaltend ein über zwei Antriebsrollen (1, 2) umlaufendes Transportband (3), ein auf den hinteren Teil des Transportbandes wirkenden, über zwei Rollen (14, 15) angetriebenes Pressband (17), eine Rakelvorrichtung (6) zur Auftragung eines Harzfilmes (8), Zuführelemente für eine Verstärkungsbahn (13) sowie gegebenenfalls Zuführelemente für weitere Bahnen, dadurch gekennzeichnet, dass das Transportband (3) bzw. die als Trennfolie oder als Trägerband dienende Bahn (5) im in Produktionsrichtung laufenden, oberen Teil über eine, in der vorderen Hälfte zwischen den beiden Antriebsrollen (1, 2) unterhalb des Transportbandes (3) angeordneten Umlenkrolle (7) geführt wird, am Auflaufpunkt der Umlenkrolle (7) einen stumpfen Winkel ∝ mit nach oben liegendem Scheitel bildet, dessen in Produktionsrichtung gesehen, hinterer Schenkel vorzugsweise horizontal ist und mit einem wesentlichen Teil mit dem Pressband (17) in Kontakt steht, der vor der Umlenkrolle (7) liegende Teil des Transportbandes mit einem Zuführelement für eine Dekorbahn (21) und mit der Rakelvorrichtung (6) zur Auftragung des Harzfilmes (8) versehen ist und oberhalb des Transportbandes (3) zwischen Rakelvorrichtung (6) und Umlenkrolle (7) eine untere Stange (12) in einem Niveau zwischen der Peripherie der Transportrolle (1) und dem Auflaufpunkt der Umlenkrolle (7), sowie in einem Abstand vom Transportband (3), der grösser ist, als die Dicke des Harzfilmes (8), angeordnet ist, so dass die durch eine Bremse (10) unter Vorspannung gehaltene, durch eine obere Stange (11) und die untere Stange (12) geführte Verstärkungsbahn (13) von oben so auf den Harzfilm (8) auftrifft, dass diese Bahn zusammen mit dem nach der Umlenkrolle (7) folgenden Teil des Transportbandes (3) einen mit ∝ scheitelgleichen Winkel β bildet, der grösser als ∝, aber kleiner als 180° ist, und das Pressband (17) durch eine Niederhalterolle (16) auf das Transportband (3) gedrückt wird, und gegebenenfalls Elemente zur Zuführung einer Abdeckbahn (18) einer Dekorfolie (23) sowie gegebenenfalls eine Auftragevorrichtung für Klebstoff auf die Unterseite der Abdeckbahn (18) vorgesehen sind.

**Claims**

1. Process for the continuous production of single-layer or multi-layer reinforced sheets of thermosetting plastic by introducing a reinforcing sheet into a resin mixture applied continuously to a carrier sheet by means of a doctor blade, and by subsequent hardening at increased temperature and under pressure, characterised in that an obtuse angle ∝ with its vertex pointing upwards is formed by the carrier sheet during its progress, in that the resin mixture is applied before the vertex is reached, in that the carrier sheet carrying the resin film is combined at the vertex with the prestressed reinforcing sheet made of fibre material or absorbent foam material, likewise extending at an obtuse angle β with its vertex pointing upwards, the angle β being greater than ∝, but less than 180° and having in common with ∝ the vertex and the leg pointing in the direction of run, and in that, if appropriate, one or more separating or decorative covering foils and/or covering foils impermeable to resin and, if appropriate, coated with adhesive are supplied before or after the vertex is reached.

2. Process according to claim 1, characterised in that the carrier sheet to be coated with resin mixture is resin-repellant and/or the resin mixture to be applied is provided with agents which prevent bonding with the carrier sheet, the carrier sheet being the conveyor belt (3) or the sheet (5) which is designed as a separating foil and does not combine with the layered material.

3. Process according to claim 1, characterised in that the carrier sheet is impermeable to resin, but bonds with the resin mixture, the carrier sheet being the sheet (5).

4. Process according to claim 1, characterised in that, before the resin mixture is applied, there is supplied to the carrier sheet a sheet which is permeable to synthetic resin and, if appropriate, has a decoration or a print and which is then coated with the resin mixture.

5. Process according to claims 1 to 4, characterised in that, after the vertex is reached, there is supplied to the carrier sheet a covering sheet (18), designed as a resin-repellant separating foil or as a covering foil impermeable to resin, but bonding with the resin mixture and, if appropriate, coated with adhesive, as well as, if appropriate, between the covering sheet (18) and the carrier sheet a decorative foil (23) permeable to synthetic resin.

6. Process according to claim 5, characterised in that the covering foil impermeable to resin, but bonding with the resin mixture is made of a thermoplastic plastic, and the resin mixture has been hardened before it combines with the covering foil, but after it passes the vertex, under the action of relatively high temperature until the "B" state is reached.

7. Apparatus for carrying out the process according to claims 1 to 6, containing a conveyor belt (3) revolving via two drive rollers (1, 2), a press belt (17) acting on the rear part of the conveyor belt and driven via two rollers (14, 15), a doctor blade device (6) for applying a resin film (8), feed elements for a reinforcing sheet (13), and, if appropriate, feed elements for further sheets, characterised in that the conveyor belt (3) or the sheet (5) serving as a separating foil or as a carrier belt is guided, in the upper part running in the production direction, via a deflecting roller (7) located underneath the conveyor belt (3) in the front half between the two drive rollers (1, 2), forms at the run-on point of the deflecting roller (7) an obtuse angle $\propto$ with its vertex pointing upwards, the rear leg of which, seen in the production direction, is preferably horizontal, and is substantially in contact with the press belt (17), the part of the conveyor belt located in front of the deflecting roller (7) is provided with a feed element for a decorative sheet (21) and with the doctor blade device (6) for applying the resin film (8), and above the conveyor belt (3) between the doctor blade device (6) and the deflecting roller (7) is located a lower rod (12) at a level between the periphery of the transport roller (1) and the run-on point of the deflecting roller (7) and at a distance from the conveyor belt (3) which is greater than the thickness of the resin film (8), so that the reinforcing sheet (13) prestressed by a brake (10) and guided by an upper rod (11) and the lower rod (12) encounters the resin film (8) from above in such a way that this sheet forms, together with a part of the conveyor belt (3) following after the deflecting roller (7), an angle $\beta$ with the same vertex as $\propto$, which is greater than $\propto$, but less than 180°, and the press belt (17) is pressed by a holding-down roller (16) onto the conveyor belt (3), and, if appropriate, there are elements for supplying a covering sheet (18) of a decorative foil (23), and, if appropriate, a device for applying adhesive to the underside of the covering sheet (18).

## Revendications

1. Procédé pour la fabrication en continu de bandes renforcées comportant une ou plusieurs couches constituées par une matière plastique thermodurcissable par incorporation d'une bande de renforcement à un mélange de résine appliqué de façon continue sur une bande de support au moyen d'une racle et durcissement ultérieur à haute température et sous pression, caractérisé en ce que la bande de support se déplace en formant dans sa trajectoire un angle obtus $\propto$ à sommet dirigé vers le haut, en ce qu'avant d'atteindre le sommet le mélange de résine est appliqué sur cette bande, en ce que la bande de support portant le film de résine ainsi formé est réunie au sommet avec la bande de renforcement en matière fibreuse ou en matière spongieuse ou cellulaire absorbante, qui se déplace selon un trajet formant également un angle obtus $\beta$ à sommet dirigé vers le haut et qui se trouve sous une tension préalable, l'angle $\beta$ étant supérieur à l'angle $\propto$ mais ayant une valeur inférieure à 180°, et son sommet ainsi que son côté orienté dans la direction de déplacement coïncidant avec ceux de l'angle $\propto$, et en ce qu'on fait arriver si désiré une ou plusieurs feuilles de décollement, de décoration et/ou de recouvrement revêtues le cas échéant d'un adhésif et imperméables à la résine, avant ou après avoir atteint le sommet précité.

2. Procédé suivant la revendication 1, caractérisé en ce que la bande de support devant être revêtue avec le mélange de résine est incompatible avec la résine et/ou le mélange de résine devant être déposé est conjugué à des moyens qui empêchent une liaison avec la bande de support, cette bande de support étant constituée par la bande de transport (3) ou par la bande (5) qui est formée par une feuille de séparation et qui ne se réunit pas avec la matière lamifiée.

3. Procédé suivant la revendication 1, caractérisé en ce que la bande de support est imperméable à la résine mais peut toutefois être réunie au mélange de résine, la bande de support étant formée par la bande (5).

4. Procédé suivant la revendication 1, caractérisé en ce que la bande de support reçoit, avant l'application du mélange de résine, une bande perméable à la résine synthétique, présentant le cas échéant un décor ou une inscription, qui est ensuite revêtue avec le mélange de résine.

5. Procédé suivant l'une quelconque des revendications 1 à 4, caractérisé en ce que la bande de support reçoit, avant d'atteindre le sommet, une bande de recouvrement (18) qui est constituée par une feuille de séparation incompatible avec et ne se liant pas à elle, ou bien par une feuille de recouvrement imperméable à la résine mais se liant toutefois au mélange de résine et recouverte éventuellement d'adhésif, ainsi si désiré qu'une feuille de décoration (23) perméable à la résine synthétique, entre la bande de recouvrement (18) et la bande de support.

6. Procédé suivant la revendication 5, caractérisé en ce que la feuille de recouvrement imperméable à la résine mais se liant toutefois au mélange de résine est constituée par une matière thermoplastique, et en ce que le mélange de résine est durci jusqu'à atteindre l'état B avant la réunion avec la feuille de recouvrement, mais toutefois après franchissement du sommet, sous l'effet d'une température élevée.

7. Dispositif pour la mise en oeuvre du procédé suivant les revendications 1 à 6, comportant une bande de transport (3) passant sur deux rouleaux d'entraînement (1, 2), une bande de pressage (17) agissant sur la partie arrière de la bande de transport et entraînée par deux rouleaux (14, 15), un dispositif formant racle (6) pour l'application d'un film de résine (8), des éléments d'amenée pour une bande de renforcement (13) ainsi que le cas échéant des éléments d'amenée pour d'autres bandes, caractérisé en ce que la bande de transport (3) ou la bande (5) servant de feuille de séparation ou bien de bande de transport est guidée, dans sa partie supérieure se déplaçant dans la direction de fabrication, par passage sur un rouleau de renvoi (7) disposé dans la moitié avant entre les deux rouleaux d'entraînement (1, 2) et au-dessous de la bande de transport (3), en formant au point d'attaque du rouleau de renvoi (7) un angle obtus $\alpha$ à sommet dirigé vers le haut dont le côté arrière, quand on regarde dans la direction de production, est de préférence orienté horizontalement et est en contact par une partie importante avec la bande de pressage (17), la partie de la bande de transport qui se trouve en avant du rouleau de renvoi (7) étant munie d'un élément d'amenée pour une bande de décoration (21) et du dispositif formant racle (6) pour l'application du film de résine (8), en ce qu'il est prévu au-dessus de la bande de transport (3), entre le dispositif formant racle (6) et le rouleau de renvoi (7), une barre inférieure (12) placée à un niveau situé entre la périphérie du rouleau de transport (1) et le point d'attaque du rouleau de renvoi (7), ainsi qu'à une distance de la bande de transport (3) qui est supérieure à l'épaisseur du film de résine (8), de sorte que la bande de renforcement (13), qui est maintenue sous une tension préalable par un frein (10) et qui est guidée par une barre supérieure (11) et par la barre inférieure (12), rejoint depuis le haut le film de résine (8) dans des conditions telles que cette bande forme avec la partie de la bande de transport (3) qui suit le rouleau de renvoi (7) un angle $\beta$ ayant même sommet que l'angle $\alpha$, plus grand que cet angle $\alpha$ mais plus petit que 180°, en ce que la bande de pressage (17) est pressée sur la bande de transport (3) au moyen d'un rouleau d'appui (16), et en ce qu'il est prévu éventuellement des éléments d'amenée d'une bande de recouvrement (18), d'une feuille de décoration (23), ainsi que le cas échéant un dispositif d'application d'un adhésif sur la face inférieure de la bande de recouvrement (18).

Fig. 1